# EUROPÄISCHE PATENTANMELDUNG

(11) **EP 2 503 574 A2**
(43) Veröffentlichungstag der Anmeldung: **26.09.2012**
(21) Anmeldenummer: 12002057.3
(22) Anmeldetag: 23.03.2012
(51) Int. Cl.: H01H 1/00

(54) **Kommunikationssystem mit überwachtem Eingangszustand einer Eingangseinrichtung sowie Stromerhöhungseinrichtung**

(30) Priorität: 25.03.2011 DE 102011015220
(71) Anmelder: Phoenix Contact GmbH & Co. KG, 32825 Blomberg (DE)
(72) Erfinder: Oster, Viktor, 32825 Blomberg (DE)
(74) Vertreter: Blumbach - Zinngrebe

(57) **Zusammenfassung**

Die vorliegende Erfindung betrifft ein Kommunikationssystem (10) mit überwachtem Eingangszustand einer Eingangseinrichtung (20). Die Eingangseinrichtung (20) weist einen Eingangsanschluss (32), einen Masseanschluss (34) sowie eine zwischen dem Eingangsanschluss (32) und Masseanschluss (34) geschaltete Eingangsschaltung (70) auf. Die Eingangsschaltung (70) ist zum Erfassen eines Eingangssignals ausgebildet. Weiterhin ist eine Sensoreinrichtung (100) vorgesehen, die an den Eingangsanschluss (32) und gegebenenfalls an den Masseanschluss (34) angeschaltet ist. Das Kommunikationssystem (10) weist ferner eine an den Eingangsanschluss (32) und den Masseanschluss (34) angeschaltete Stromerhöhungseinrichtung auf, die dazu ausgebildet ist, in Abhängigkeit von der im Eingangsanschluss anliegenden Spannung für eine einstellbare Zeitdauer einen erhöhten Strom für die Eingangsschaltung (70) bereitzustellen. Zudem ist eine Versorgungsspannungsquelle (30) zur Versorgung der Sensoreinrichtung (100) mit Energie vorgesehen.

## Beschreibung

Die Erfindung betrifft ein Kommunikationssystem mit einer Eingangseinrichtung, deren Eingangszustand überwacht wird, sowie eine in einem solchen Kommunikationssystem einsetzbare Stromerhöhungseinrichtung.

Auch in der Automatisierungstechnik schreitet die Miniaturisierung hinsichtlich der Schaltungstechnik und der Geräten immer weiter voran. Dies hat zur Folge, dass Maßnahmen ergriffen werden müssen, um die Verlustleistung in den Geräten und Schaltungen zu reduzieren. Bei digitalen Eingangsgeräten hat diese Entwicklung dazu geführt, dass der Eingangsstrom immer kleiner eingestellt werden muss. Bei manchen Anwendungen liegt der Eingangsstrom sogar unter 5mA. Da die Kontakte von Sensoren, welche an die digitalen Eingangsgeräte angeschlossen sind, endliche Übergangswiderstände aufweisen, kann der Eingangsstrom soweit abfallen, dass er nicht mehr sicher vom Eingangsgerät erkannt werden kann. Diese Nachteile könnten zwar durch hochqualitative Kontakte, wie z.B. vergoldete Kontakte reduziert werden; jedoch sind Sensoren mit solchen Kontakten teuer.

Der Erfindung liegt daher die Aufgabe zugrunde, ein Kommunikationssystem mit überwachtem Eingangszustand einer Eingangseinrichtung sowie eine Stromerhöhungseinrichtung bereit zu stellen, welche eine sicherere Erfassung kontaktbehafteter Signale auch bei Sensoren mit weniger hochqualitativen Kontakten, die somit kostengünstiger sind, ermöglichen.

Das oben genannte technische Problem wird zum Einen durch die Merkmale des Anspruchs 1 gelöst.

Demgemäß ist ein Kommunikationssystem mit überwachtem Eingangszustand einer Eingangseinrichtung vorgesehen, welche eine Eingangseinrichtung aufweist. Die Eingangseinrichtung weist einen Eingangsanschluss, einen Masseanschluss sowie eine zwischen den Eingangs- und Masseanschluss geschaltete Eingangsschaltung auf. Die Eingangsschaltung ist derart ausgebildet, dass sie von einem Sensor gelieferte Eingangssignale erfassen kann. Weiterhin ist eine Sensoreinrichtung vorgesehen, welche an den Eingangsanschluss und, je nach Implementierung, gegebenenfalls an den Masseanschluss angeschaltet ist. Das Kommunikationssystem weist ferner eine Versorgungsspannungsquelle zum Versorgen der Sensoreinrichtung mit Energie auf. Zudem verfügt das Kommunikationssystem über eine an den Eingangsanschluss und Masseanschluss angeschaltete Stromerhöhungseinrichtung, die dazu ausgebildet ist, in Abhängigkeit von der am Eingangsanschluss anliegenden Spannung für eine einstellbare Zeitdauer einen erhöhten Strom für die Eingangsschaltung bereitzustellen.

Dank dieser Maßnahme ist es möglich, kontaktbehaftete Eingangssignale auch dann sicher zu erfassen, wenn in Folge eines ansteigenden Übergangswiderstands des Sensorkontaktes der Eingangsstrom deutlich reduziert wird. Ein weiterer Vorteil dieser erfindungsgemäßen Maßnahme ist, dass durch eine vorübergehende Erhöhung des Eingangsstroms verschmutzte Kontakte der Sensoreinrichtung gereinigt werden können und somit deren Übergangswiderstand wieder reduziert werden kann

Angemerkt sei an dieser Stelle, dass es sich bei der Versorgungsspannungsquelle um eine separate Spannungsquelle, welche zum Beispiel nur die Sensoreinrichtung speist, um eine an die Eingangseinrichtung anschaltbare Spannungsquelle oder um eine in der Eingangseinrichtung angeordnete Spannungsquelle handeln kann. Die Eingangseinrichtung kann einen Versorgungsspannungsanschluss aufweisen, an welchem die Versorgungsspannungsquelle anschließbar ist.

Bei dem Kommunikationssystem kann es sich um eine Automatisierungsanlage oder eine Stand-Alone-Vorrichtung handeln. Die Eingangseinrichtung kann als digitales Eingabegerät ausgebildet und Bestandteil einer Ein- und Ausgangseinrichtung sein. Die Ein- und Ausgangseinrichtung kann als Steuereinrichtung, beispielsweise als speicherprogrammierbare Steuereinrichtung ausgebildet sein. Als Sensoreinrichtung kann ein Not-Aus-Schalter, ein Türschutzschalter und dergleichen eingesetzt werden.

Bei einer vorteilhaften Ausgestaltung des Kommunikationssystems ist die Stromerhöhungseinrichtung dazu ausgebildet, den Innenwiderstand der Eingangsschaltung in Abhängigkeit von der am Eingangsanschluss anliegenden Spannung für eine einstellbare Zeitdauer zu reduzieren.

Angemerkt sei an dieser Stelle, dass die einstellbare Zeitdauer so kurz gewählt werden kann, dass die Verlustleistung niedrig gehalten und eine Überlastung des Kommunikationssystems vermieden werden kann.

Zweckmäßigerweise weist die Stromerhöhungseinrichtung eine Detektoreinrichtung auf, die zum Erfassen der Spannung zwischen dem Eingangsanschluss und dem Masseanschluss ausgebildet ist. Weiterhin ist wenigstens ein mit der Detektoreinrichtung verbundenes Schaltelement vorgesehen, dass dazu ausgebildet ist, ein elektrisches Widerstandselement mit konstantem Widerstandwert zwischen Eingangs- und Masseanschluss zu schalten, wenn die Spannung zwischen Eingangs- und Masseanschluss unter einen Schwellwert gefallen ist.

Die Stromerhöhungseinrichtung kann dazu ausgebildet sein, in Abhängigkeit des erfassten Eingangszustands der Eingangseinrichtung das Schaltelement ein- oder auszuschalten.

Um eine an den Eingangszustand optimal angepasste Stromerhöhung vornehmen zu können, weist die Stromerhöhungseinrichtung eine Detektoreinrichtung auf, die zum Erfassen der Spannung zwischen dem Eingangsanschluss und dem Masseanschluss ausgebildet ist, wobei ein mit der Detektoreinrichtung verbundenes, spannungsabhängiges Widerstandselement vorgesehen ist, dessen Widerstandswert in Abhängigkeit von der am Eingangsanschluss anliegenden Spannung veränderbar ist.

An dieser Stelle sei angemerkt, dass die Stromerhöhungseinrichtung auch als Stromquelle ausgebildet sein kann.

Alternativ kann die Eingangseinrichtung eine Detektoreinrichtung aufweisen, die zum Erfassen der Spannungsdifferenz zwischen dem Versorgungsspannungsanschluss und dem Eingangsanschluss ausgebildet ist. In diesem Fall ist die Stromerhöhungseinrichtung dazu ausgebildet, den Innenwiderstand der Eingangsschaltung in Abhängigkeit von der erfassten Spannungsdifferenz für eine einstellbare Zeitdauer zu reduzieren. Auch bei diesem Ausführungsbeispiel kann die Stromerhöhungseinrichtung dazu ausgebildet sein, den Innenwiderstand um einen konstanten Wert oder um einen in Abhängigkeit von der erfassten Spannungsdifferenz veränderbaren Wert zu reduzieren.

Um eine kompakte Bauweise zu ermöglichen, kann die Stromerhöhungseinrichtung in der Eingangseinrichtung implementiert sein.

Alternativ kann die Stromerhöhungseinrichtung auch als extern anschaltbare Schaltungseinrichtung ausgebildet sein, welche z.B. in einer Klemme oder Reihenklemme implementiert ist, an welche die Eingangseinrichtung angeschlossen werden kann.

Das oben genannte technische Problem wird ebenfalls mit den Merkmalen des Anspruchs 10 gelöst.

Demgemäß ist eine Stromerhöhungseinrichtung vorgesehen, welche zum Einsatz in dem oben geschriebenen Kommunikationssystem ausgebildet ist.

Die Erfindung wird nachfolgend anhand eines Ausführungsbeispiels in Verbindung mit den beiliegenden Zeichnungen näher erläutert ist. Es zeigen:
- Fig. 1: ein Kommunikationssystem mit einer Eingangseinrichtung und einer erfindungsgemäßen Stromerhöhungseinrichtung,
- Fig. 2: einen beispielhaften Schaltungsaufbau der in Fig. 1 gezeigten Stromerhöhungseinrichtung,
- Fig. 3: eine beispielhafte schaltungstechnische Realisierung der in Fig. 2 gezeigten Referenzspannungsschaltung.

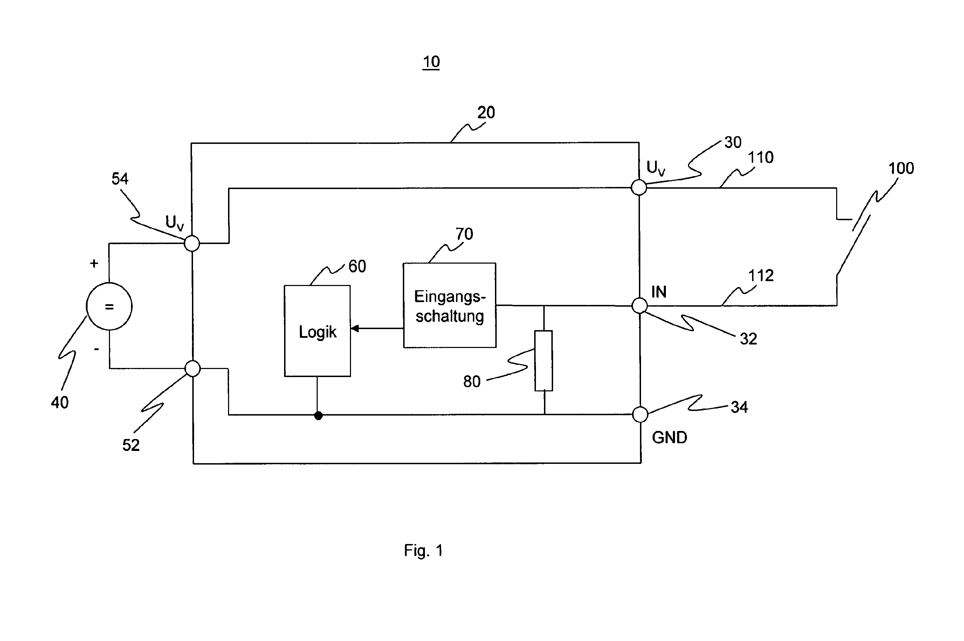

In Fig. 1 ist ein beispielhaftes Kommunikationssystem 10 dargestellt, welches eine Eingangseinrichtung 20 enthält.

Die Eingangseinrichtung kann als digitales Eingabegerät ausgebildet sein. Angemerkt sei, dass die Eingangseinrichtung 20 Bestandteil einer Ein- und Ausgangseinrichtung, einer Steuereinrichtung oder auch eines Feldgerätes sein kann, welche sowohl einen digitalen Eingang als auch einen digitalen Ausgang aufweisen kann. Das Kommunikationssystem 10 kann im Standalone-Betrieb arbeiten oder Bestandteil einer Automatisierungsanlage sein.

Die Eingangseinrichtung 20 kann über einen Versorgungsspannungsanschluss Uᵥ, welcher durch das Bezugszeichen 30 gekennzeichnet ist, verfügen. An dem Versorgungsspannungsanschluss 30 liegt eine Versorgungsspannung Uᵥ an, welche beispielsweise durch eine Gleichspannungsquelle 40 geliefert wird. Die Gleichspannungsquelle 40 kann eine externe Gleichspannungsquelle sein, die an Eingängen 52 und 54 der Eingangseinrichtung 20 angeschlossen ist. Die Gleichspannungsquelle 40 liefert beispielsweise eine Versorgungsspannung von 25 Volt. Die Eingangseinrichtung 20 weist einen digitalen Eingang mit wenigstens einem digitalen Eingangsanschluss IN auf, welcher durch das Bezugszeichen 32 gekennzeichnet ist.

Die in Fig. 1 gezeigte Eingangseinrichtung 20 fungiert als Eingangsgerät, an dessen Versorgungsspannungsanschluss 30 und Eingangsanschluss 32 eine Last 100 angeschlossen. Die Last 100 ist ein Sensor, welcher im vorliegenden Beispiel ein Notausschalter ist. Denkbar ist auch, dass der Sensor 100 unmittelbar an eine externe Spannungsquelle, zum Beispiel die Spannungsquelle 40, angeschlossen wird. In diesem Fall benötigt die Eingangseinrichtung 30 keinen Versorgungsspannungsanschluss 30.

Die Eingangseinrichtung 20 weist ferner eine Eingangsschaltung 70 auf, welche mit dem Eingangsanschluss 32 verbunden ist. Die Funktion einer derartigen Eingangsschaltung ist an sich bekannt. Üblicherweise enthält die Eingangsschaltung 70 einen Schwellwertdetektor, der erkennt, ob am Eingangsanschluss 32 eine Spannung anliegt, die beispielsweise größer als 11 Volt ist, oder ob am Eingangsanschluss 32 eine Spannung anliegt, die beispielsweise kleiner als 5 Volt ist. Die Eingangsschaltung 70 ist mit einer Logikeinrichtung 60 verbunden, die wiederum mit dem Masseanschluss 34 der Eingangseinrichtung 20 verbunden ist. Die Logikeinrichtung 60 hat unter Anderem die Aufgabe, dem von der Eingangsschaltung 70 erfassten Spannungspegel einen logischen Wert zuzuordnen. Beispielsweise wird jedem Spannungswert, welcher größer oder gleich 11 Volt ist, der logische Wert 1 zugeordnet, während allen Spannungspegeln die kleiner als 5 Volt sind, der logische Wert 0 zugeordnet wird.

Weiterhin weist die Eingangseinrichtung 20 eine Stromerhöhungseinrichtung 80 auf, die ebenfalls zwischen den Eingangsanschluss 32 und den Masseanschluss 34 geschaltet ist. Die Stromerhöhungseinrichtung 80 kann, wie Fig. 1 zeigt, in der Eingangseinrichtung 20 implementiert sein. Alternativ kann sie als separate Schaltung extern an die Eingangseinrichtung 20 angeschlossen werden. Denkbar ist auch, dass die Stromerhöhungseinrichtung 80 in einer Klemme oder Reihenklemme implementiert ist, an welche die Eingangseinrichtung 20 angeschlossen werden kann.

Bereits an dieser Stelle sei erwähnt, dass eine Aufgabe der Stromerhöhungseinrichtung 80 darin besteht, den Eingangsstrom für die Eingangsschaltung 70 gezielt für eine einstellbare Zeit zu erhöhen, so dass die Eingangsschaltung 70 das Eingangssignal korrekt erfassen kann. Die Funktionsweise der Stromerhöhungseinrichtung 80 wird weiter unten noch näher erläutert.

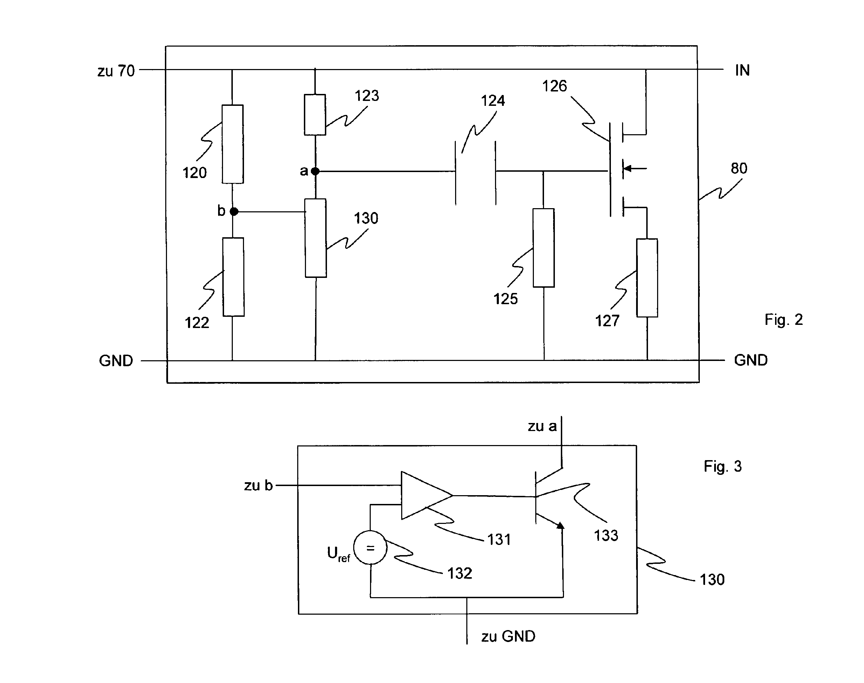

Fig. 2 zeigt eine beispielhafte schaltungstechnische Realisierung der in Fig. 1 gezeigten Stromerhöhungseinrichtung 80. Die Stromerhöhungseinrichtung 80 weist eine Spannungs-Detektoreinrichtung auf, welche einen Spannungsteiler umfasst, der zwei in Reihe geschaltete Widerstände 120 und 122 aufweist. Die Widerstände 120 und 122 des Spannungsteilers sind mit dem Eingangsanschluss 32 und dem Masseanschluss 34 verbunden, wobei ein Anschluss des Widerstandes 120 mit dem Eingangsanschluss 32 und ein Anschluss des Widerstandes 122 mit dem Massenanschluss 34 verbunden ist. Die anderen Anschlüsse der Widerstände 120 und 122 bilden einen gemeinsamen Verbindungspunkt b. An den Eingangsanschluss 32 ist ein Widerstand 123 angeschlossen, welcher mit dem Ausgang einer Referenzspannungsschaltung 130 verbunden ist. Die Referenzspannungsschaltung 130 kann zusammen mit den Widerständen 120 und 122 der Detektoreinrichtung zugeordnet werden. Zudem ist die Referenzspannungsschaltung 130 mit dem Masseanschluss verbunden. Die Referenzspannungsschaltung 130 weist ferner einen Eingang auf, welcher mit der Verbindungsstelle b des Spannungsteilers verbunden ist. Der Ausgang der Referenzspannungsschaltung 130 bildet mit dem Anschluss des Widerstandes 123 einen gemeinsamen Verbindungspunkt a, der über einen Kondensator 124 mit dem Steueranschluss eines Schaltelements 126 verbunden ist. Bei dem Schaltelement 126 kann es sich um einen Feldeffekttransistor handeln. Der Feldeffekttransistor 126 ist beispielsweise ein selbstsperrender n-Mosfet. In diesem Fall ist der Steueranschluss der Gateanschluss des Feldeffekttransistors. Der Gateanschluss des Feldeffekttransistors 126 ist vorzugsweise über einen Widerstand 125 mit dem Masseanschluss 34 verbunden. Der Sourceanschluss des Feldeffekttransistors 126 ist über einen Widerstand 127 mit dem Masseanschluss 34 verbunden.

Der Widerstand 127 ist im dargestellten Beispiel ein passiver Widerstand mit einem konstanten Widerstandswert. Der Drainanschluss des Feldeffekttransistors 126 ist mit dem Eingangsanschluss 32 des Ein- und Ausgabegerätes 20 verbunden.

Fig. 3 zeigt eine beispielhafte schaltungstechnische Realisierung der in Fig. 2 gezeigten Referenzspannungsschaltung 130. Die Referenzspannungsschaltung 130 weist einen Komparator 131 auf, dessen einer Eingang mit dem Verbindungspunkt b verbunden ist. Der andere Eingang des Komparators 131 ist an eine Gleichspannungsquelle 132 angeschlossen, die zudem mit dem Masseanschluss 34 verbunden ist. Die Gleichspannungsquelle 132 liefert eine Referenzspannung U_{ref}, die beispielsweise 15 Volt beträgt. Der Ausgang des Komparators 131 ist mit dem Eingang eines Schaltelements 133 verbunden, welcher im vorliegenden Beispiel als bipolarer npn-Transistor ausgebildet ist. Der Ausgang des Komparators 131 ist deshalb mit dem Basisanschluss Transistors 133 verbunden, während der Kollektor des Transistors 133 mit dem Verbindungspunkt a verbunden ist. Der Emitteranschluss des Transistors 133 ist mit dem Masseanschluss 34 verbunden.

Nachfolgend wird die Funktionsweise des Kommunikationssystems 10 anhand der Figuren 1 bis 3 näher erläutert.

In dem nachfolgend beschriebenen, beispielhaften Szenario wird der Eingangszustand der Eingangseinrichtung 20 von der Eingangsschaltu8ng 70 überwacht, um eine Verschlechterung des Übergangswiderstandes des Kontaktes des Notausschalters 100 zu erfassen.

Zunächst sei angenommen, dass der Kontakt des Sensors 100 geschlossen ist und einwandfrei arbeitet. Ist der Kontakt des Sensors 100 geschlossen, liegt die Betriebsspannung Uᵥ über den Versorgungsspannungsanschluss 30 und den Notausschalter 100 im Wesentlichen auch am Eingangsanschluss 32 an. In diesem Zustand ist die Stromerhöhungseinrichtung 80 deaktiviert, d.h. der Feldeffekttransistor 126 ist geöffnet bzw. hochohmig. Denn die am Verbindungspunkt b des Spannungsteilers anliegende Spannung, welche proportional zur Spannung am Eingangsanschluss 32 ist, ist in diesem Fall größer als die Referenzspannung U_{ref} der Referenzspannungsschaltung 130, d. h. größer als 15 V. Folglich steuert der Komparator 131 den Transistor 133 derart an, dass dieser leitend wird und somit den Verbindungspunkt a auf Masse GND zieht. Dieses Verhalten wird durch eine geeignete Dimensionierung des Spannungsteilers erreicht. In diesem Zustand ist der Kondensator 124 entladen, so dass der Feldeffekttransistor 126 der Stromerhöhungseinrichtung 80 geöffnet ist.

Die Eingangsschaltung 70 erkennt somit im ordnungsgemäßen Zustand des Sensors 100, dass die Eingangsspannung am Eingangsanschluss 32 größer als der eingestellte Schwellwert von 11 Volt ist, sodass die Logikeinrichtung 60 einen logischen High-Pegel signalisiert.

Angenommen sei nunmehr, dass sich im Laufe des Betriebs der Übergangswiderstand des Sensorkontaktes erhöht, so dass die am Eingangsanschluss 32 anliegende Spannung entsprechend abfällt. Dieser Spannungsabfall wird kontinuierlich von den Widerständen 120 und 122 des Spannungsteilers erfasst. Fällt die an der Verbindungsstelle b liegende Spannung, welche auch am Eingang des Komparators 131 anliegt, infolge eines entsprechenden Anstiegs des Übergangswiderstands des Sensorkontaktes unter den Wert der Referenzspannung U_{ref} der Spannungsquelle 132, geht der Ausgang des Komparators 131 auf Null, wodurch der Transistor 133 sperrt; die Referenzspannungsschaltung 130 wird folglich hochohmig. Der Verbindungspunkt a zwischen dem Widerstand 123 und der Referenzspannungsschaltung 130 wird somit über den Widerstand 123 auf die am Eingangsanschluss 32 anliegende Spannung gezogen. Dadurch wird der Feldeffekttransistor 126 leitend, sodass der Widerstand 127 zwischen den Eingangsanschluss 32 und den Masseanschluss 34 und parallel zum Innenwiderstand geschaltet wird. Dadurch reduziert sich der hinsichtlich des Eingangsanschlusses 32 und des Masseanschlusses 34 wirkende Innenwiderstand. Als Ergebnis fließt ein höherer Eingangsstrom in die Eingangsschaltung 70, die dadurch den geschlossenen Schaltzustand des Sensors 100 trotz Verschlechterung des Übergangswiderstands des Sensorkontaktes sicher erkennen kann. Der Wert des Widerstands 127 kann auf den jeweils angeschlossenen Sensor 100 abgestimmt sein, um eine ausreichende Stromerhöhung zu erzielen.

Die gezielte Erhöhung des Eingangsstroms durch die Stromerhöhungseinrichtung 80 hat zudem den Vorteil, dass der Kontakt des Sensors 100 gereinigt wird. Demzufolge wird der Übergangswiderstand des Sensorkontaktes reduziert und die Spannung am Eingangsanschluss 32 steigt wieder. Die Eingangsschaltung 70 kann derart ausgebildet sein, dass sie einen Spannungsanstieg am Eingangsanschluss 32 erkennt. Unter Ansprechen auf den Spannungsanstieg kann die Eingangsschaltung 70 und/oder die Logikeinrichtung 60 die Stromerhöhungseinrichtung 80 deaktiviert, d.h. zum Beispiel den Widerstand 127 hochohmig halten.

Alternativ oder zusätzlich kann die Verschlechterung des Übergangswiderstands des Sensorkontaktes auch dadurch erfasst werden, dass die Spannungsdifferenz zwischen dem Versorgungsspannungsanschluss 30 und dem Eingangsanschluss 32 überwacht wird. Vorteilhafterweise kann die Eingangsschaltung 70 oder die Stromerhöhungseinrichtung 80 dazu ausgebildet sein, diese Spannungsdifferenz zu überwachen. Hierzu könnte der Spannungsteiler der Stromerhöhungseinrichtung 80 zwischen den Versorgungsspannungsanschluss 30 und den Eingangsanschluss 32 geschaltet sein. Erkennt die Eingangsschaltung 70 oder die Stromerhöhungseinrichtung 80, dass die Spannungsdifferenz zwischen dem Versorgungsspannungsanschluss 30 und dem Eingangsanschluss 32 zunimmt, spricht diese Zunahme für eine Verschlechterung der Qualität des Sensorkontaktes und somit für einen erhöhten Spannungsabfall am Kontakt des Sensors 100. Überschreitet die überwachte Spannungsdifferenz einen einstellbaren Schwellwert, wird der Feldeffekttransistor 126 leitend und zum Beispiel der ohmsche Widerstand 127 zwischen den Eingangsanschluss 32 und den Masseanschluss 34 geschaltet. Diese Maßnahme führt wiederum zu einer gezielten Erhöhung des Eingangsstroms. Wird die Spannungsdifferenz von der Eingangsschaltung 70 überwacht, kann der Feldeffekttransistor 126 zum Beispiel von der Logikeinrichtung 60 angesteuert werden.

Die Widerstände 123 und 125 bilden zusammen mit dem Kondensator 124 ein Zeitglied, dessen Dimensionierung eine Zeitkonstante bestimmt, die festlegt, wie lange der Feldeffekttransistor 126 während eines Stromerhöhungsvorgangs leitend sein soll. Dadurch kann die Stromerhöhungseinrichtung 80 gegen Überlastung geschützt werden, wenn zum Beispiel durch einen fehlerhaften Sensor 100 für einen längeren Zeitraum eine konstante Spannung am Eingangsanschluss 32 anliegt, die unterhalb der Referenzspannung U_{ref} der Spannungsquelle 132 liegt.

An dieser Stelle sei angemerkt, dass zwischen den Verbindungspunkten b und a mehrere Referenzspannungsschaltungen geschaltet sein können, welche bei unterschiedlichen Schwellwerten, d. h. Referenzspannungen, einen hoch- oder niederohmigen Ausgang bilden. Denkbar ist in diesem Zusammenhang, dass jede Referenzspannungsschaltung einen unterschiedlich dimensionierten Entladewiderstand 127 ansteuern kann, sodass der am Eingangsanschluss 32 und Masseanschluss 34 wirkende Innenwiderstand in Abhängigkeit der jeweils eingestellten Referenzspannungsquelle diskret verändert wird.

Denkbar ist ferner, dass der elektrische Widerstand, der durch die Stromerhöhungseinrichtung 80 während eines Stromerhöhungsvorgangs zwischen den Eingangsanschluss 32 und Masseanschluss 34 bereitgestellt wird, nicht durch den passiven Widerstand 127, sondern durch einen spannungsgesteuerten Widerstand gebildet wird. In diesem Fall kann der am Eingangsanschluss 32 und am Masseanschluss 34 wirkende Innenwiderstand in Abhängigkeit von der am Eingangsanschluss 32 anliegenden Spannung kontinuierlich reduziert werden.

Dank der Maßnahme, dass die Stromerhöhungseinrichtung 80 nur temporär aktiv ist, kann die Verlustleistung des Kommunikationssystems 10 reduziert werden. Da die Stromerhöhungseinrichtung 80 ferner keine Signalentkopplung benötigt, sondern direkt in die Zuleitung 110, 112 zum Sensor 100 geschaltet ist, können Fehler, z. B. Querschlüsse in der Zuleitung 110, 112 ohne Beeinträchtigung durch die Stromerhöhungseinrichtung 80 beispielsweise von der Eingangsschaltung 70 erkannt werden.

## Patentansprüche

1. Kommunikationssystem (10) mit überwachtem Eingangszustand einer Eingangseinrichtung umfassend eine Eingangseinrichtung (20), welche einen Eingangsanschluss (32), einen Masseanschluss (34) und eine zwischen den Eingangsanschluss (32) und Masseanschluss (34) geschaltete Eingangsschaltung (70) aufweist, welche zum Erfassen eines Einganssignal ausgebildet ist,
eine an den Eingangsanschluss (32) angeschaltete Sensoreinrichtung (100),
eine Versorgungsspannungsquelle (40) zum Versorgen der Sensoreinrichtung (100) mit Energie, und
eine an den Eingangsanschluss (32) und Masseanschluss (34) angeschalteten Stromerhöhungseinrichtung (80), die dazu ausgebildet ist, in Abhängigkeit von der am Eingangsanschluss (32) anliegenden Spannung für eine einstellbare Zeitdauer einen erhöhten Strom für die Eingangsschaltung (70) bereitzustellen.

2. Kommunikationssystem nach Anspruch 1
**dadurch gekennzeichnet, dass**
die Eingangsschaltung (70) einen Innenwiderstand aufweist und dass
die Stromerhöhungseinrichtung (80) dazu ausgebildet ist, den Innenwiderstand der Eingangsschaltung (70) in Abhängigkeit von der am Eingangsanschluss (32) anliegenden Spannung für eine einstellbare Zeitdauer zu reduzieren.

3. Kommunikationssystem nach Anspruch 1 oder 2,
**dadurch gekennzeichnet, dass**
die Eingangseinrichtung (20) einen Versorgungsspannungsanschluss (30), an welchen die Versorgungsspannungsquelle (40) anschließbar ist, aufweist.

4. Kommunikationssystem nach Anspruch 1, 2 oder 3, **dadurch gekennzeichnet, dass**
die Stromerhöhungseinrichtung (80) aufweist:
eine Detektoreinrichtung (120, 122, 130), die zum Erfassen der Spannung zwischen dem Eingangsanschluss (32) und dem Massenanschluss (34) ausgebildet ist, wenigstens ein mit der Detektoreinrichtung (120, 122, 130) verbundenes Schaltelement (126), das dazu ausgebildet ist, ein elektrisches Widerstandselement (127)mit konstantem Widerstandswert zwischen den Eingangsanschluss (32) und Masseanschluss (34) zu schalten, wenn die Spannung zwischen dem Eingangsanschluss (32) und dem Masseanschluss (34) unter einen Schwellwert gefallen ist.

5. Kommunikationssystem nach Anspruch 4,
**dadurch gekennzeichnet, dass**
die Stromerhöhungseinrichtung (80) zum Ein- oder Ausschalten des Schaltelements (126) ausgebildet ist.

6. Kommunikationssystem nach Anspruch 1, 2 oder 3, **dadurch gekennzeichnet, dass**
die Stromerhöhungseinrichtung (80) aufweist:
eine Detektoreinrichtung (120, 122, 130), die zum Erfassen der Spannung zwischen dem Eingangsanschluss (32) und dem Massenanschluss (34) ausgebildet ist, und ein mit der Detektoreinrichtung (120, 122, 130) verbundenes, spannungsabhängiges Widerstandselement, dessen Widerstandswert in Abhängigkeit von der am Eingangsanschluss (32) anliegenden Spannung veränderbar ist.

7. Kommunikationssystem nach den Ansprüchen 2 und 3, **dadurch gekennzeichnet, dass**
die Eingangseinrichtung (20) eine Detektoreinrichtung aufweist, die zum Erfassen der Spannungsdifferenz zwischen dem Versorgungsspannungsanschluss (30) und dem Eingangsanschluss (32) ausgebildet ist, und dass die Stromerhöhungseinrichtung (80) dazu ausgebildet ist, den Innenwiderstand der Eingangsschaltung (70) in Abhängigkeit von der erfassten Spannungsdifferenz für eine einstellbare Zeitdauer zu reduzieren.

8. Kommunikationssystem nach Anspruch 7,
**dadurch gekennzeichnet, dass**
die Stromerhöhungseinrichtung (80) dazu ausgebildet ist, den Innenwiderstand um einen konstanten Wert oder um einen in Abhängigkeit von der erfassten Spannungsdifferenz veränderbaren Wert zu reduzieren.

9. Kommunikationssystem nach einem der vorstehenden Ansprüche,
**dadurch gekennzeichnet, dass**
die Stromerhöhungseinrichtung (80) in der Eingangseinrichtung (20) implementiert oder als anschaltbare Schaltungseinrichtung ausgebildet ist.

10. Kommunikationssystem nach einem der vorstehenden Ansprüche,
**dadurch gekennzeichnet, dass**
die Eingangseinrichtung (20) eine speicherprogrammierbare Steuereinrichtung ist.

11. Stromerhöhungseinrichtung (80), welche zum Einsatz in einem Kommunikationssystem (10) gemäß einem der vorstehenden Ansprüche ausgebildet ist.
